**Europäisches Patentamt**

**European Patent Office**

**Office européen des brevets**

(19)

(11) Veröffentlichungsnummer: **0 122 596**
**B1**

(12) # EUROPÄISCHE PATENTSCHRIFT

(45) Veröffentlichungstag der Patentschrift:
16.03.88

(51) Int. Cl.⁴: **F 16 H 25/24**

(21) Anmeldenummer: **84104061.1**

(22) Anmeldetag: **11.04.84**

(54) **Wälzringspindeltrieb.**

(30) Priorität: **11.04.83 DE 3313453**

(43) Veröffentlichungstag der Anmeldung:
**24.10.84 Patentblatt 84/43**

(45) Bekanntmachung des Hinweises auf die Patenterteilung:
**16.03.88 Patentblatt 88/11**

(84) Benannte Vertragsstaaten:
**AT BE CH DE FR GB IT LI LU NL SE**

(56) Entgegenhaltungen:
**EP-A-0 034 640**
**DE-A-1 450 764**
**DE-A-3 012 334**
**DE-A-3 225 495**
**US-A-3 614 900**

(73) Patentinhaber: **Betzing, Klaus, Vogelherd 3, D-5800 Hagen (DE)**

(72) Erfinder: **Betzing, Rudolf, Vogelherd 3, D-5800 Hagen (DE)**
Erfinder: **Betzing, Klaus, Vogelherd 3, D-5800 Hagen (DE)**
Erfinder: **Betzing, Ulrich, Vogelherd 3, D-5800 Hagen (DE)**
Erfinder: **Betzing, Annette, Vogelherd 3, D-5800 Hagen (DE)**

(74) Vertreter: **Patentanwälte Dipl.- Ing. Conrad Köchling Dipl.- Ing. Conrad- Joachim Köchling, Fleyer Strasse 135, D-5800 Hagen 1 (DE)**

**Description**

Die Erfindung betrifft einen Wälzringspindeltrieb mit einer Antriebsspindel, mindestens einem Wälzlager und einem Abtriebsgehäuse, wobei das Wälzlager als Übertragungselement zwischen der Antriebsspindel und dem Abtriebsgehäuse wirksam ist, mindestens einen in die Gewindenut der Antriebsspindel eingreifenden Wälzring aufweist, das Wälzlager exzentrisch angeordnet ist, die Mittelachse des Wälzlagers gegenüber der Längsachse der Antriebsspindel geneigt ist und das Abtriebsgehäuse mindestens eine Wälzlageraufnahme aufweist.

Wälzringspindeltriebe der zuvor in ihrem grundsätzlichen Aufbau beschriebenen Art sind vielfach bekannt (vgl. das DE-V- 19 92 325, die DE-A-19 49 049, die DE-B-22 62 062, die DD-A-51 174, die FR-A-14 87 424, die GB-A-6 29 993 sowie die US-A-24 77 701, 24 82 082, 24 88 256, 25 25 326, 25 56 572, 26 11 280, 26 16 302, 27 78 239 und 29 61 887). Gleichwohl darf zunächst noch erläuternd folgendes ausgeführt werden:

Wälzringspindeltriebe dienen dazu, eine Rotationsbewegung - der Antriebsspindel - in eine Translationsbewegung - des Antriebsgehäuses - umzusetzen. Daraus folgt schon, daß es sich bei dem Abtriebsgehäuse nicht um ein übliches - geschlossenes - Gehäuse handeln muß. Vielmehr kann auch ein Abtriebsrahmen vorgesehen sein.

Bei Wälzringspindeltrieben wird die Rotationsbewegung der Antriebsspindel durch das Wälzlager - als Übertragungsglied zwischen der Antriebsspindel und dem Abtriebsgehäuse - in eine Translationsbewegung des Abtriebsgehäuses umgesetzt. Dazu greift das Wälzlager, mit einem Wälzring, in die Gewindenut der Antriebsspindel ein; der Wälzring kann mit dem Innenring des Wälzlagers verbunden sein, er kann aber auch als Teil des Innenringes des Wälzlagers an der Innenseite des Innenringes des Wälzlagers ausgebildet sein.

Die gewünschte Kinematik zwischen der Antriebsspindel und dem Wälzlager macht es erforderlich, daß einerseits das Wälzlager exzentrisch angeordnet ist, daß andererseits die Mittelachse des Wälzlagers gegenüber der Längsachse der Antriebsspindel geneigt ist. Da nun die Mittelachse des Wälzlagers gegenüber der Längsachse der Antriebsspindel geneigt ist, ist die Aussage, wonach das Wälzlager exzentrisch angeordnet ist, etwas schief, gleichwohl üblich. Definiert man bei einem Wälzlager neben der Mittelachse als der Achse durch den Mittelpunkt des Wälzlagers noch die Wälzlagerlaufebene als die Ebene, die durch den Mittelpunkt des Wälzlagers geht und auf der die Mittelachse senkrecht steht, so bedeutet die exzentrische Anordnung des Wälzlagers, daß die Längsachse der Antriebsspindel nicht im Mittelpunkt des Wälzlagers durch die Wälzlagerlaufebene geht.

Im Stand der Technik gemäß US-A-36 14 900, von dem die Erfindung ausgeht, ist die Wälzlageraufnahme rotationssymmetrisch. Da nun die Mittelachse des Wälzlagers gegenüber der Längsachse der Antriebsspindel geneigt sein muß, ist ein - der Realisierung der Wälzlageraufnahme dienender- Wälzlageraufnahmekörper vorgesehen, der in axialer Richtung geteilt ist; d.h. mindestens zwei sich ergänzende Hälften des Wälzlageraufnahmekörpers sind jeweils mit einem Teil der Wälzlageraufnahme versehen. Folglich kann das Wälzlager axial, also in Richtung seiner Mittelachse, in den ersten Teil der Wälzlageraufnahme eingesetzt werden und die Wälzlageraufnahme danach durch ihren zweiten Teil komplettiert werden.

Die Tatsache, daß bei den bekannten Wälzringspindeltrieben der Wälzlageraufnahmekörper in axialer Richtung geteilt ist und jeder der beiden sich ergänzenden Hälften mit einem Teil der Wälzlageraufnahme versehen ist, ist nachteilig, weil schon die geringste, wegen nicht vermeidbarer Toleranzen auch nicht vermeidbare fehlerhafte Zuordnung der beiden Hälften des Wälzlageraufnahmekörpers dazu führt, daß die Wälzlageraufnahme nicht die vorgegebene Konfiguration und nicht die vorgegebene Zuordnung von Antriebsspindel hat und folglich ihrer Funktion nicht optimal genügen kann. Im Ergebnis treten Reibungsverluste auf, so daß bei allen bekannten Wälzringspindeltrieben der mechanische Wirkungsgrad bei der Umsetzung der Rotationsbewegung der Antriebsspindel in eine Translationsbewegung des Abtriebsgehäuses zu wünschen übrig läßt.

Der Erfindung liegt also die Aufgabe zugrunde, einen bezüglich der Reibungsverluste und damit des Wirkungsgrades verbesserten Wälzringspindeltrieb anzugeben.

Der erfindungsgemäße Wälzringspindeltrieb, bei dem die zuvor hergeleitete und dargelegte Aufgabe gelöst ist, ist nun zunächst und im wesentlichen dadurch gekennzeichnet, daß die Wälzlageraufnahme über maximal 180° geht, - so daß das Wälzlager senkrecht zu seiner Mittelachse, also in der Wälzlagerlaufebene, in die Wälzlageraufnahme eingeschoben werden kann.

Erfindungsgemäß ist erkannt worden, daß eine rotationssymmetrische, den Außenring des Wälzlagers komplett aufnehmende Wälzlageraufnahme nicht erforderlich ist, daß es zur Aufnahme der von der Antriebsspindel kommenden und über das Wälzlager auf das Abtriebsgehäuse zu übertragenden Kräfte vielmehr ausreicht, wenn die Wälzlageraufnahme den Außenring des Wälzlagers nur teilweise aufnimmt. Über welchen Umfangvinkel die Wälzlageraufnahme geht, hängt vom Einzelfall ab, insbesondere von den zu übertragenden Kräften. Die obere Grenze liegt jedoch bei 180°, so daß das Wälzlager senkrecht zu seiner Mittelachse, also in der Wälzlagerlaufebene, in die Wälzlageraufnahme eingeschoben werden kann.

Bei dem erfindungsgemäßen Wälzringspindeltrieb ist also eine Teilung des Wälzlageraufnahmekörpers in axialer Richtung nicht erforderlich. Daraus resultiert dann, daß eine einteilige Wälzlageraufnahme verwirklicht werder kann, so daß das im Stand der Technik vorhandene, weiter oben erläuterte Problem, daß die Wälzlageraufnahme nicht die vorgegebene Konfiguration und nicht die vorgegebene Zuordnung zur Antriebsspindel hat, nicht auftritt.

Im einzelnen gibt es verschiedene Möglichkeiten, den erfindungsgemäßen Wälzringspindeltrieb auszugestalten und weiterzubilden, was im folgenden nur beispielhaft erläutert werden soll.

Weiter oben ist bereits ausgeführt, daß bei den im Stand der Technik bekannten Wälzringspindeltrieben innerhalb des Abtriebsgehäuses ein Wälzlageraufnahmekörper vorgesehen ist und der Wälzlageraufnahmekörper die Wälzlageraufnahme aufweist. So kann auch der erfindungsgemäße Wälzringspindeltrieb ausgeführt sein. Besonders vorteilhaft ist jedoch eine Ausführungsform, die dadurch gekennzeichnet ist, daß das Abtriebsgehäuse selbst mit der Wälzlageraufnahme versehen ist, ein besonderer Wälzlageraufnahmekörper also nicht vorgesehen ist.

Wenn bei dem erfindungsgemäßen Wälzringspindeltrieb die Exzentrizität des Wälzlagers hinreichend groß ist, so ist es denkbar, den Wälzlageraufnahmekörper bzw. das Abtriebsgehäuse - jedenfalls im Bereich der Wälzlageraufnahme - einteilig auszuführen und trotzdem die Möglichkeit zu haben, das Wälzlager in die Wälzlageraufnahme einzuschieben. Vorteilhafter, insbesondere in fertigungstechnischer Hinsicht, ist jedoch eine Ausführungsform des erfindungsgemäßen Wälzringspindeltriebes, die dadurch gekennzeichnet ist, daß der Wälzlageraufnahmekörper bzw. das Abtriebsgehäuse in radialer Richtung geteilt ist, - wobei dann nur ein Teil des in radialer Richtung geteilten Wälzlageraufnahmekörpers bzw. des in radialer Richtung geteilten Abtriebsgehäuses mit der Wälzlageraufnahme versehen ist.

Weiter oben ist bereits ausgeführt, daß Toleranzen nicht vermeidbar sind. Das gilt sowohl in bezug auf die Antriebsspindel als auch in bezug auf die in einem Wälzlageraufnahmekörper oder im Abtriebsgehäuse verwirklichte Wälzlageraufnahme. Um diese Toleranzen beim zusammengebauten erfindungsgemäßen Wälzringspindeltrieb eliminieren zu können, geht eine weitere Lehre der Erfindung, der besondere Bedeutung zukommt, dahin, das Maß der Exzentrizität des Wälzlagers einstellbar zu machen, - so daß bei dem erfindungsgemäßen Wälzringspindeltrieb gleichsam eine Anstellung zwischen Wälzlager und Antriebsspindel möglich ist.

Die zuletzt erläuterte Lehre der Erfindung der Einstellbarkeit der Exzentrizität des Wälzlagers kann dadurch realisiert werden, daß die Antriebsspindel in radialer Richtung relativ zum Wälzlager einstellbar ist. Einfacher zu realisieren ist jedoch eine Ausführungsform, die dadurch gekennzeichnet ist, daß der Wälzlageraufnahmekörper in radialer Richtung relativ zur Antriebsspindel einstellbar ist. Das kann im einzelnen dadurch realisiert sein, daß das Abtriebsgehäuse radial verlaufende Gewindebohrungen aufweist und der Wälzlageraufnahmekörper mit Hilfe von in den Gewindebohrungen geführten Stellschrauben radial einstellbar ist.

Zuvor ist erläutert worden, daß und warum es zweckmäßig sein kann, bei dem erfindungsgemäßen Wälzringspindeltrieb das Maß der Exzentrizität des Wälzlagers einstellbar zu machen, also eine Möglichkeit der Anstellung zwischen Wälzlager und Antriebsspindel zu verwirklichen. Zweckmäßig kann es auch sein, die Wälzlageraufnahme in axialer Richtung relativ zur Antriebsspindel einstellbar auszuführen oder, was funktionell auf das Gleiche herauskommt, die Antriebsspindel in axialer Richtung relativ zur Wälzlageraufnahme einstellbar auszuführen. Dadurch ist dann eine axiale Anstellung zwischen der Wälzlageraufnahme und der Antriebsspindel möglich.

Wälzringspindeltriebe der in Rede stehenden Art werden häufig mit zwei (oder mehr) Wälzlagern und dann mit zwei (oder mehr) Wälzlageraufnahmen ausgeführt. Bei einer solchen Ausführungsform geht eine weitere Lehre der Erfindung, dahin, daß mindestens eine Wälzlageraufnahme in axialer Richtung relativ zur Antriebsspindel einstellbar ist.

Will man einen Wälzringspindeltrieb mit einem besonders geringen Spiel zwischen der Antriebsspindel und dem Abtriebsgehäuse verwirklichen, so muß man darauf achten, daß die - weitgehende - Spielfreiheit für beide Drehrichtungen der Antriebsspindel sichergestellt ist. Das läßt sich besonders dann gut realisieren, venn zwei (oder mehr) Wälzlager und folglich zwei (oder mehr) Wälzlageraufnahmen vorgesehen sind. Eine erste Ausführungsform kann dann dadurch gekennzeichnet sein, daß beide Wälzlageraufnahmen in axialer Richtung relativ zur Antriebsspindel einstellbar sind. Eine andere, einfacher zu realisierende Ausführungsform ist dadurch gekennzeichnet, daß die erste Wälzlageraufnahme in axialer Richtung relativ zur Antriebsspindel einstellbar ist und die Antriebsspindel - mittels der ersten Wälzlageraufnahme bzw. mittels des ersten Wälzlagers - in axialer Richtung relativ zur zweiten Wälzlageraufnahme einstellbar ist.

Einleitend ist bei der Behandlung des Standes der Technik dargelegt worden, daß bei den im Stand der Technik bekannten Wälzringspindeltrieben relativ hohe Reibungsverluste auftreten, so daß bei allen bekannten Wälzringspindeltrieben der mechanische Wirkungsgrad bei der Umsetzung der Rotationsbewegung der Antriebsspindel in eine Translationsbewegung des Abtriebsgehäuses zu wünschen übrig läßt. Diese Reibungsverluste haben nicht nur die eingangs erläuterte Ursache, so daß weitere Lehren der Erfindung sich damit befassen, anderweitig verursachte Reibungsverluste zu reduzieren.

Folglich ist nach einer weiteren Lehre der Erfindung, ein erfindungsgemäßer Wälzringspindeltrieb dadurch gekennzeichnet, daß die Neigung zwischen der Mittelachse des Wälzlagers und der Längsachse der Antriebsspindel der Steigung der Antriebsspindel im Kraftangriffskreis entspricht.

Theoretisch sollte die Kraft von der Antriebsspindel an einem Kraftangriffspunkt auf das Wälzlager, in der Regel also auf den in die Gewindenut der Antriebsspindel eingreifenden Wälzring, übertragen werden. Wegen der Elastizität der miteinander in Eingriff kommenden Werkstoffe läßt sich ein Kraftangriffspunkt jedoch nicht realisieren, vielmehr ergibt sich eine sichelförmige Kraftangriffsfläche.

Wenn zuvor ausgeführt worden ist, daß die Neigung zwischen der Mittelachse des Wälzlagers und der Längsachse der Antriebsspindel der Steigung der Antriebsspindel im Kraftangriffskreis entsprechen soll, dann meint Kraftangriffskreis den Kreis, auf dem die - theoretischen - Kraftangriffspunkte liegen. Dadurch, daß hinsichtlich der Neigung zwischen der Mittelachse des Wälzlagers und der Längsachse der Antriebsspindel auf die Steigung der Antriebsspindel im Kraftangriffskreis abgestellt wird, ist eine in bezug auf Reibungsverluste optimale Zuordnung zwischen dem Wälzlager und der Antriebsspindel verwirklicht.

Weil, wie zuvor ausgeführt, bei Wälzringspindeltrieben theoretisch die Kraft von der Antriebsspindel an einem Kraftangriffspunkt auf das Wälzlager, in der Regel also auf dem in die Gewindenut der Antriebsspindel eingreifenen Wälzring, übertragen werden sollte, soll konstruktiv sichergestellt werden, daß die tatsächlich wirksame - sichelförmige - Kraftangriffsfläche sich so weit wie möglich dem theoretisch Gewollten, einem Kraftangriffspunkt, annähert. Insoweit geht eine weitere Lehre der Erfindung, dahin, den Krümmungsradius des in die Gewindenut der Antriebsspindel eingreifenden Wälzringes ca. 0,7 bis 0,9 mal so groß wie den Krümmungsradius der Gewindenut der Antriebsspindel zu machen.

Schließlich geht eine weitere Lehre der Erfindung dahin, den Krümmungsradius des in die Gewindenut der Antriebsspindel eingreifenden Wälzringes in Abhängigkeit vom Krümmungsradius der Gewindenut so zu wählen, daß im Kraftangriffskreis die Tangente am Wälzring unter ca. 45° zur Längsachse der Antriebsspindel verläuft.

Bei Wälzringspindeltrieben ist die Festlegung, wo und unter welchem Winkel der Wälzring mit der Gewindenut der Antriebsspindel in Eingriff kommt, von Überlegungen bestimmt, die zu unterschiedlichen Ergebnissen führen. Da die Rotationsbewegung der Antriebsspindel in eine Translationsbewegung des Abtriebsgehäuses umgesetzt werden soll, ist insoweit eigentlich erwünscht, daß der Wälzring möglichst weit außen und unter einem Winkel von nahezu 90° mit der Gewindenut der Antriebsspindel in Eingriff kommt. Unter dem Gesichtspunkt der Ausnutzung des Querschnitts des Gewindesteges der Antriebsspindel ist jedoch erwünscht, daß der Wälzring möglichst weit innen mit der Antriebsspindel in Eingriff kommt. Die zuvor gegebene Lehre, die hier relevanten Krümmungsradien so zu wählen, daß im Kraftangriffskreis die Tangente am Wälzring unter ca. 45° zur Längsachse der Antriebsspindel verläuft, ist ein optimaler Kompromiß.

Im folgenden wird die Erfindung anhand einer lediglich ein Ausführungsbeispiel darstellenden Zeichnung ausführlicher erläutert; es zeigt

Fig. 1 einen Längsschnitt durch eine erste bevorzugte Ausführungsform eines erfindungsgemäßen Wälzringspindeltriebs,

Fig. 2 einen Längsschnitt durch eine zweite bevorzugte Ausführungsform eines erfindungsgemäßen Wälzringspindeltriebs,

Fig. 3 einen gegenüber dem Längsschnitt nach Fig. 1 um 90° versetzten Längsschnitt durch den Wälzringspindeltrieb nach Fig. 2,

Fig. 4 einen den Fig. 1 und 2 entsprechenden Längsschnitt durch eine dritte Ausführungsform eines erfindungsgemäßen Wälzringspindeltriebs,

Fig. 5 einen Längsschnitt durch eine bevorzugte Ausführungsform eines Abtriebsgehäuses eines erfindungsgemäßen Wälzringspindeltriebs,

Fig. 6 einen gegenüber dem Längsschnitt nach Fig. 5 um 90° versetzten Längsschnitt durch das Abtriebsgehäuse nach Fig. 5,

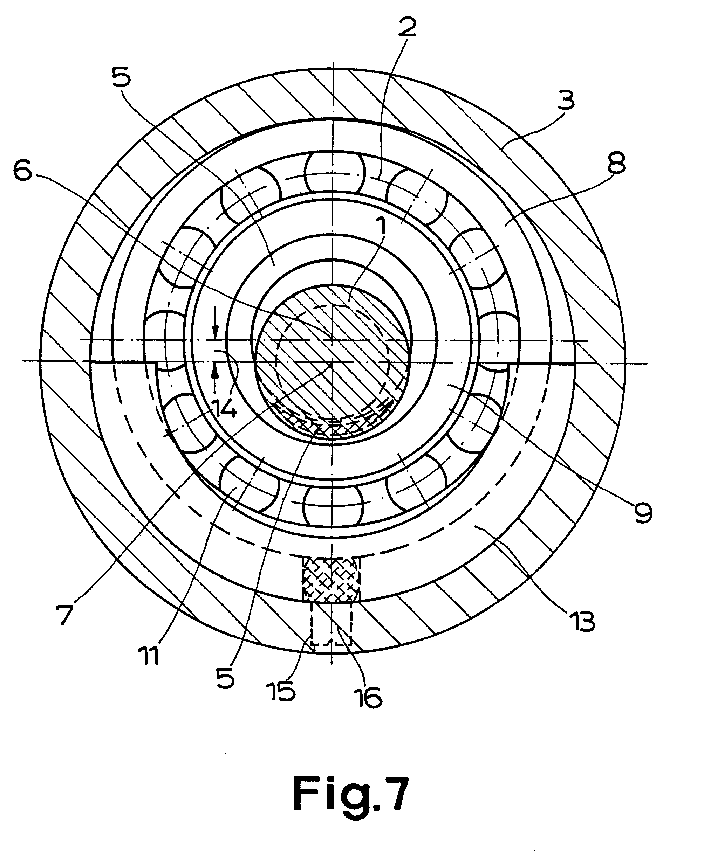

Fig. 7 einen Querschnitt durch den Wälzringspindeltrieb nach Fig. 2,

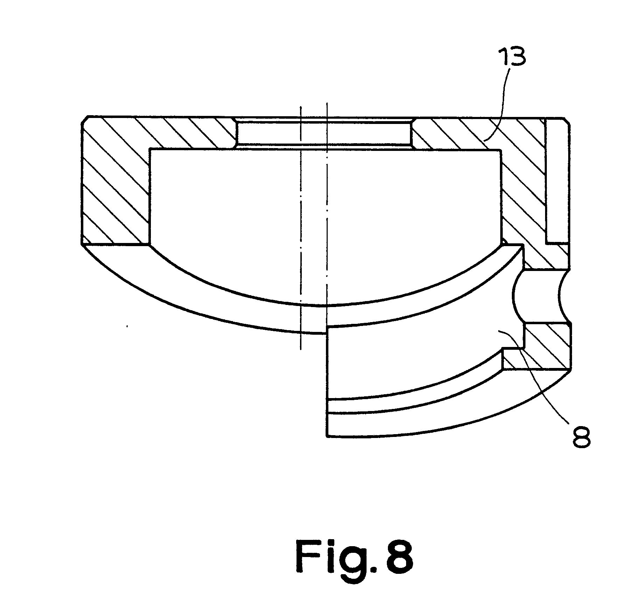

Fig. 8 einen Längsschnitt durch einen Wälzlageraufnahmekörper des Wälzringspindeltriebs nach Fig. 2,

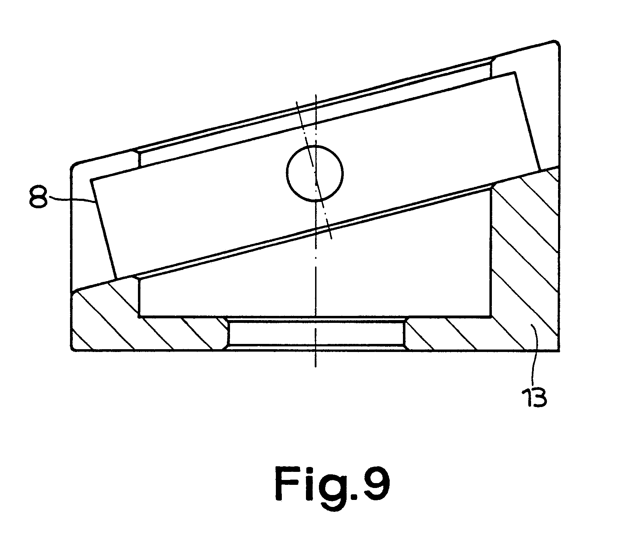

Fig. 9 einen gegenüber dem Längsschnitt nach Fig. 8 um 90° versetzten Längsschnitt durch den Gegenstand nach Fig. 8 und

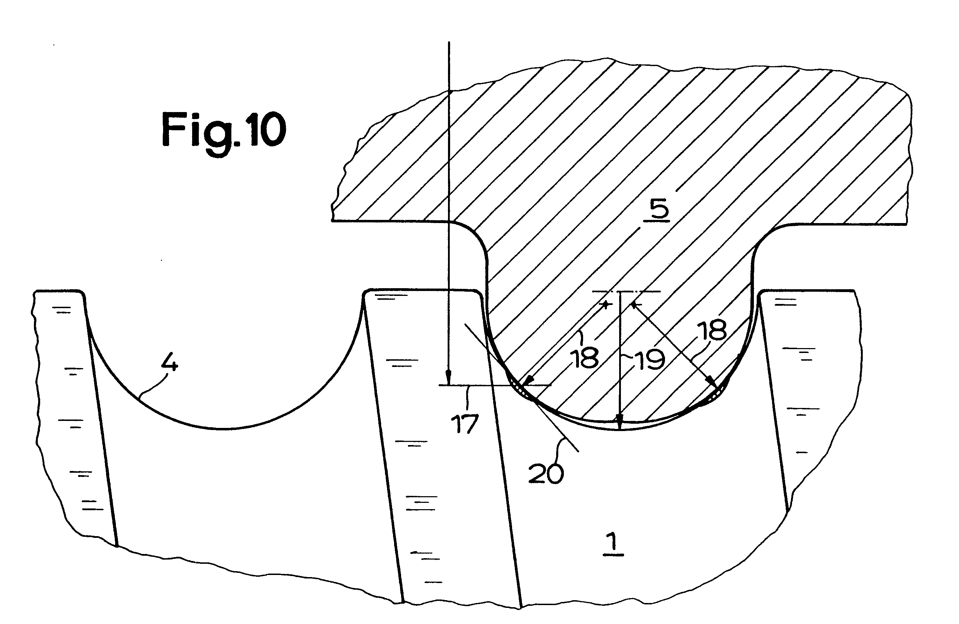

Fig. 10 einen vergrößerten Ausschnitt aus einem erfindungsgemäßen Wälzringspindeltrieb, der einen Teil des Wälzringes und einen Teil der Antriebsspindel zeigt.

Die Figuren zeigen einen Wälzringspindeltrieb, zu dem zunächst und im wesentlichen eine Antriebsspindel 1, zwei Wälzlager 2 und ein Abtriebsgehäuse 3 gehören. Dabei sind die Wälzlager 2 als Übertragungsglied zwischen der Antriebsspindel 1 und dem Abtriebsgehäuse 3 wirksam, weisen nämlich die Wälzlager 2 jeweils einen in die Gewindenut 4 der Antriebsspindel 1 eingreifenden Wälzring 5 auf, sind die Wälzlager 2 exzentrisch angeordnet, sind die Mittelachsen 6 der Wälzlager 2 gegenüber der Längsachse 7 der Antriebsspindel 1 geneigt und weist das Abtriebsgehäuse 3 zwei Wälzlageraufnahmen 8 auf.

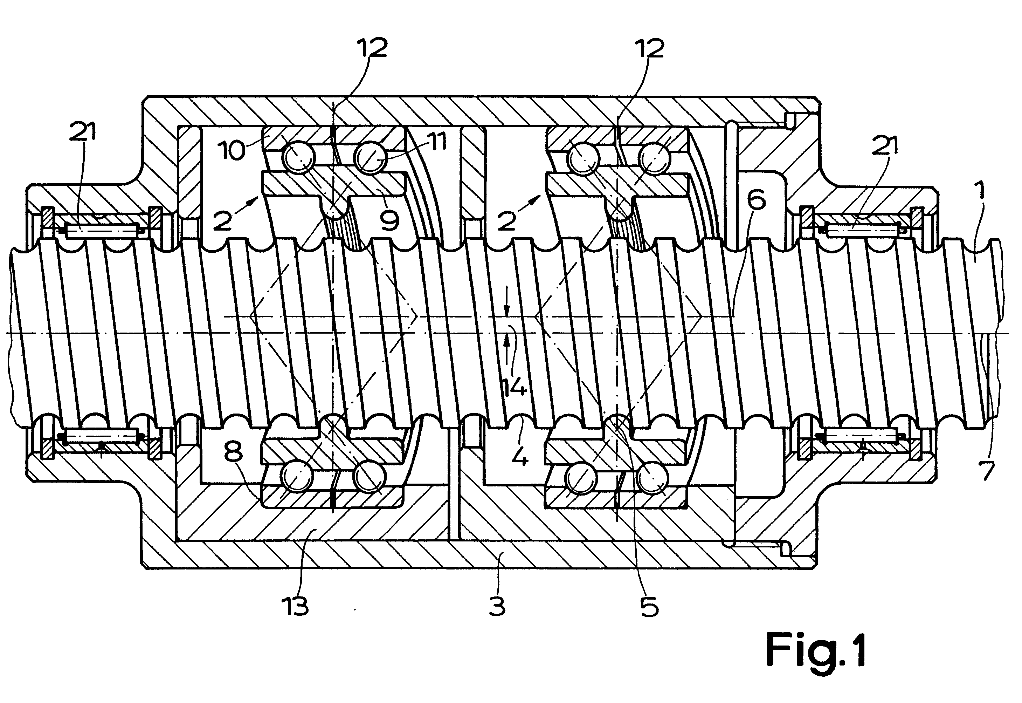

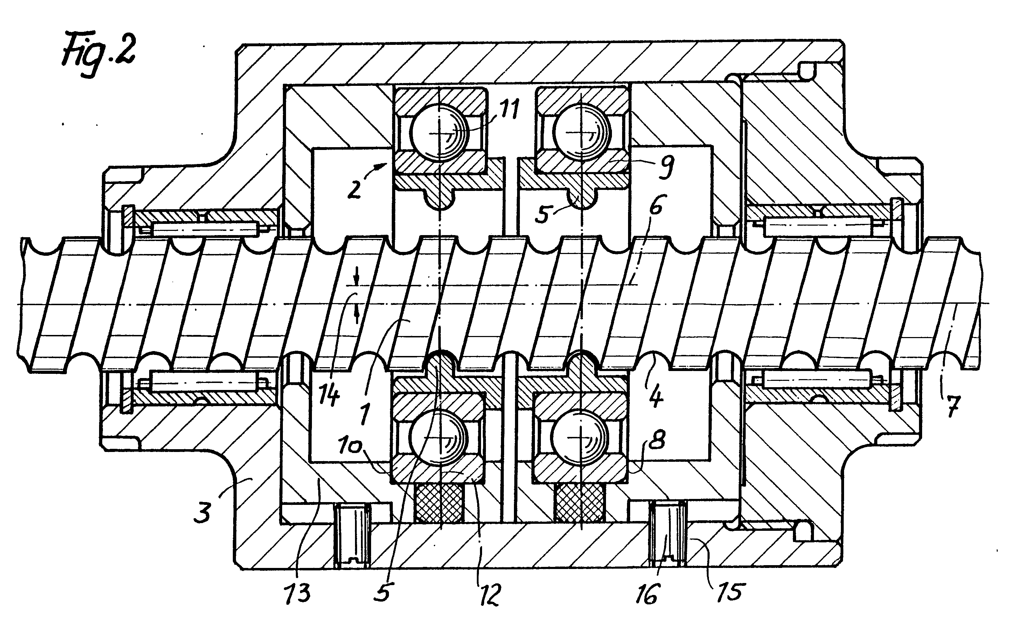

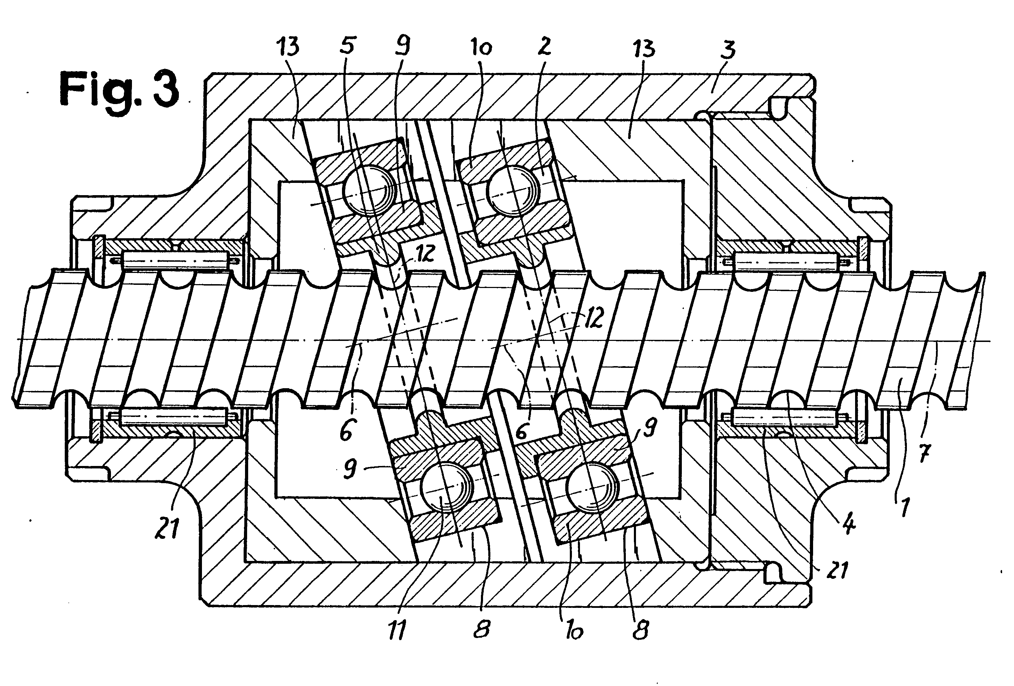

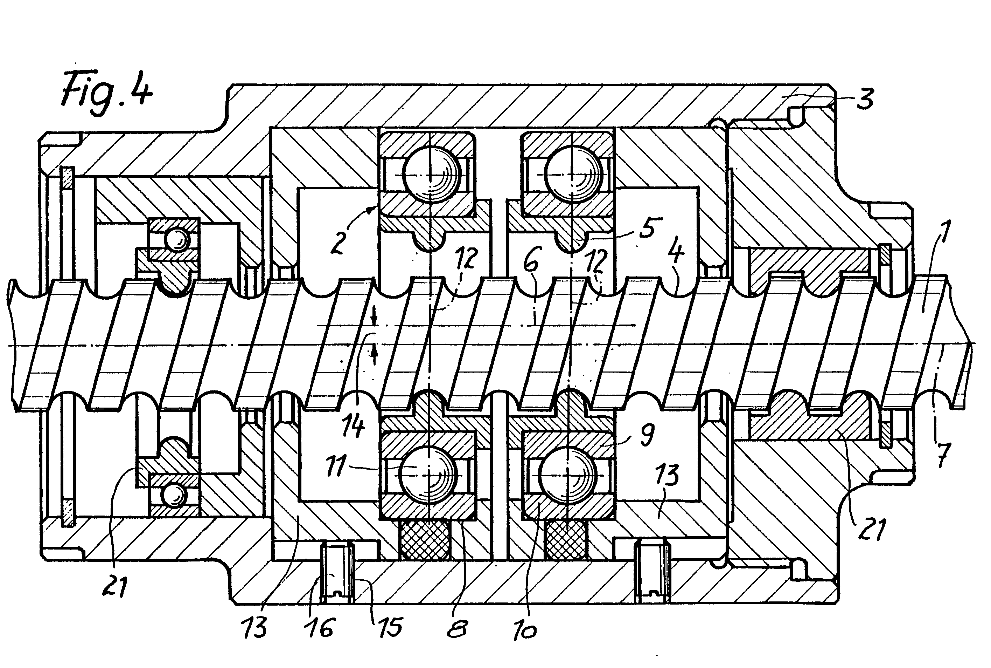

Im Ausführungsbeispiel nach Fig. 1 ist der Wälzring 5 als Teil des Innenringes 9 des Wälzlagers 2 an der Innenseite des Innenringes 9 des Wälzlagers 2 ausgebildet. Im Ausführungsbeispiel nach den Fig. 2 bis 4 ist der Wälzring 5 ein separates, mit dem Innenring 9 des Wälzlagers 2 verbundenes Bauteil.

Die zu dem erfindungsgemäßen Wälzringspindeltrieb gehörenden Wälzlager 2 bestehen, wie üblich, aus dem Innenring 9, aus einem Außenring 10 und aus Wälzkörpern 11, in den dargestellten Ausführungsbeispielen Kugeln.

Als Mittelachse 6 des Wälzlagers 2 ist die Achse durch den Mittelpunkt des Wälzlagers 2 definiert. Als Wälzlagerlaufebene 12 ist die Ebene definiert, die durch den Mittelpunkt des Wälzlagers 2 geht und auf der die Mittelachse 6 senkrecht steht.

Der erfindungsgemäße Wälzringspindeltrieb ist nun zunächst dadurch gekennzeichnet, daß jede Wälzlageraufnahme 8 über maximal 180° geht, in den Ausführungsbeispielen exakt über 180° geht. Daraus resultiert, daß jedes Wälzlager 2 senkrecht zu seiner Mittelachse 6, also in der Wälzlagerlaufebene 12, in die zugeordnete Wälzlageraufnahme 8 eingeschoben werden kann. Erfindungsgemäß ist erkannt worden, daß eine rotationssymmetrische, den Außenring 10 des Wälzlagers 2 komplett aufnehmende Wälzlageraufnahme 8 nicht erforderlich ist, daß es zur Aufnahme der von der Antriebsspindel 1 kommenden und über die Wälzlager 2 auf das Abtriebsgehäuse 3 zu übertragenden Kräfte vielmehr ausreicht, wenn jede Wälzlageraufnahme 8 den Außenring 10 des zugeordneten Wälzlagers 2 nur teilweise aufnimmt.

Bei den Ausführungsbeispielen eines erfindungsgemäßen Wälzringspindeltriebes, die in den Fig 1 bis 4 dargestellt sind, sind innerhalb des Abtriebsgehäuses 3 zwei Wälzlageraufnahmekörper 13 vorgesehen, von denen jeder eine Wälzlageraufnahme 8 aufweist.

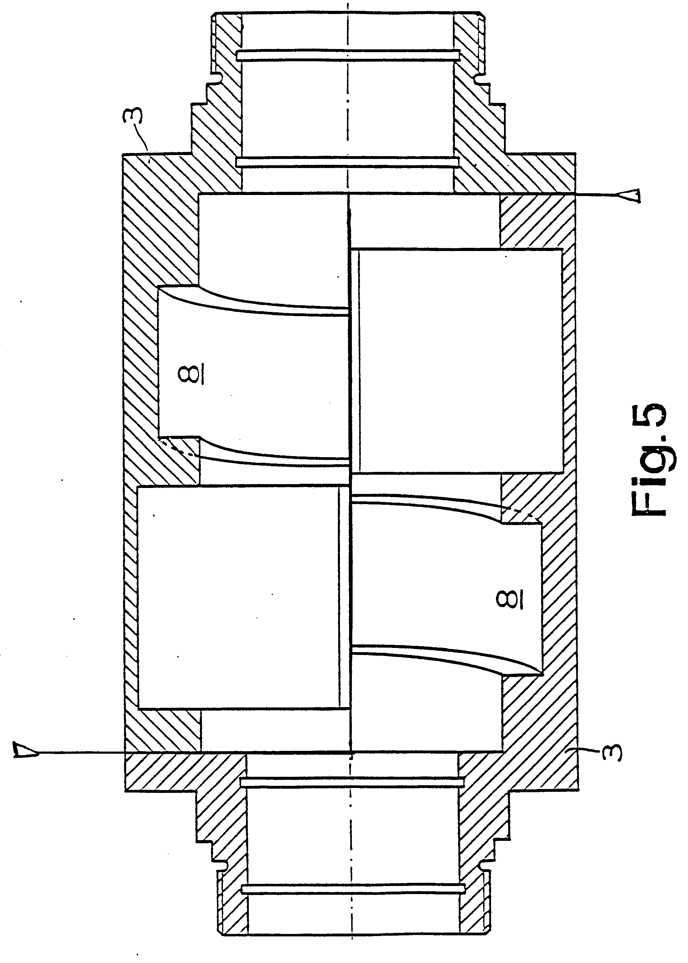

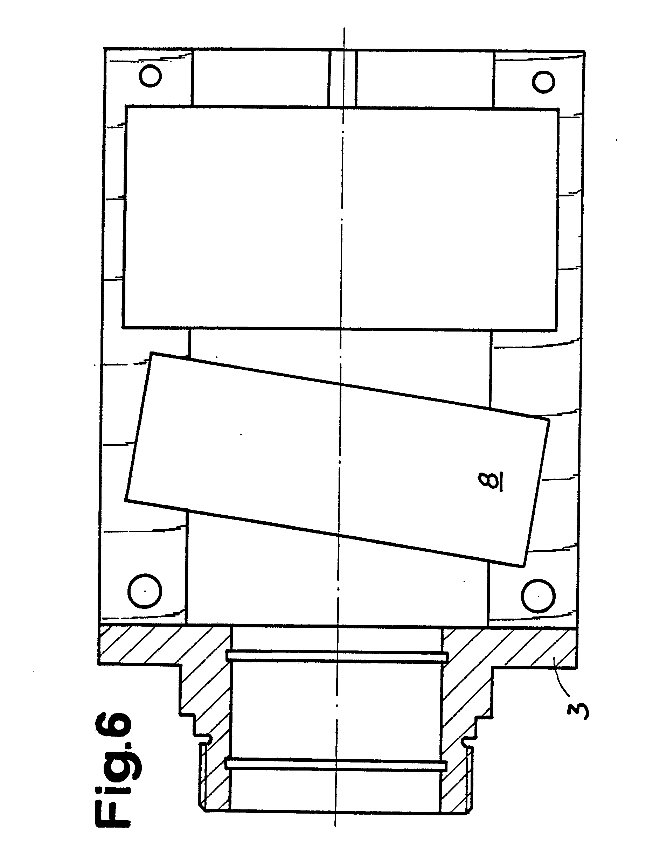

Im Gegensatz zu den zuvor beschriebenen Ausführungsbeispielen deuten die Fig. 5 und 6 ein Ausführungsbeispiel eines erfindungsgemäßen Wälzringspindeltriebes an, bei dem das Abtriebsgehäuse 3 selbst mit den Wälzlageraufnahmen 8 versehen ist.

In den Ausführungsbeispielen nach den Fig. 1 bis 4 sind die Wälzlageraufnahmekörper 13, im Ausführungsbeispiel nach den Fig. 5 und 6 ist das Abtriebsgehäuse 3 in radialer Richtung geteilt. Das ist vorteilhafter, insbesondere in fertigungstechnischer Hinsicht, als eine auch denkbare einteilige Ausführung der Wälzlageraufnahmekörper bzw. des Abtriebsgehäuses. Bei den Ausführungsbeispielen nach den Fig. 1 bis 4 ist dann jeweils nur ein Teil der in radialer Richtung geteilten Wälzlageraufnahmekörper 13 mit der Wälzlageraufnahme 8 versehen. Im Ausführungsbeispiel nach den Fig. 5 und 6 weist jeder Teil des in radialer Richtung geteilten Abtriebsgehäuses 3 eine Wälzlageraufnahme 8 für ein Wälzlager 2 auf.

Im übrigen zeigen die Figuren insoweit eine bevorzugte Ausführungsform des erfindungsgemäßen Wälzringspindeltriebs, als das Maß der Exzentrizität 14 der Wälzlager 2 einstellbar ist, so daß gleichsam eine Anstellung zwischen Wälzlager 2 und Antriebsspindel 1 möglich ist. Das ist im einzelnen dadurch realisiert, daß die Wälzlageraufnahmekörper 13 in radialer Richtung relativ zur Antriebsspindel 1 einstellbar sind. Dazu weist das Abtriebsgehäuse 3 radial verlaufende Gewindebohrungen 15 auf und sind die Wälzlageraufnahmekörper 13 mit Hilfe von in den Gewindebohrungen 15 geführten Stellschrauben 16 radial einstellbar.

Zuvor ist erläutert worden, daß bei den dargestellten bevorzugten Ausführungsbeispielen des erfindungsgemäßen Wälzringspindeltriebs das Maß der Exzentrizität 14 der Wälzlager 2 einstellbar ist, also eine Möglichkeit der Anstellung zwischen Wälzlager 2 und Antriebsspindel 1 verwirklicht ist. Im übrigen sind in den dargestellten Ausführungsbeispielen auch die Wälzlageraufnahmen 8 in axialer Richtung relativ zur Antriebsspindel 1 einstellbar bzw., was funktionell auf das Gleiche herauskommt, ist die Antriebsspindel 1 in axialer Richtung relativ zu den Wälzlageraufnahmen 8 einstellbar. Dadurch ist auch eine axiale Einstellung zwischen den Wälzlageraufnahmen 8 und der Antriebsspindel 1 möglich.

Wie sich aus den voranstehenden Ausführungen ergibt, sind nur Ausführungsbeispiele von erfindungsgemäßen Wälzringspindeltrieben dargestellt, die zwei Wälzlager 2 und zwei Wälzlageraufnahmen 8 aufweisen. Dabei ist die zuvor erläuterte Möglichkeit der axialen Anstellung zwischen den Wälzlageraufnahmen 8 und der Antriebsspindel 1 dadurch realisiert, daß die erste Wälzlageraufnahme 8 in axialer Richtung relativ zur Antriebsspindel 1 einstellbar ist und die Antriebsspindel 1 - mittels der ersten Wälzlageraufnahme 8 bzw. mittels des ersten Wälzlagers 2 - in axialer Richtung relativ zur zweiten Wälzlageraufnahme 8 einstellbar ist. Dadurch ist ein Wälzringspindeltrieb mit einem besonders geringen Spiel zwischen der Antriebsspindel 1 und dem Abtriebsgehäuse 3 verwirklicht.

Im übrigen handelt es sich bei den erfindungsgemäßen Wälzringspindeltrieben, die in den Figuren dargestellt sind, um solche, bei denen die Neigung zwischen den Mittelachsen 6 der Wälzlager 2 und der Längsachse 7 der Antriebsspindel 1 der Steigung der Antriebsspindel 1 im Kraftangriffskreis 17 entspricht. Dabei meint Kraftangriffskreis 17 den Kreis, auf dem die - theoretischen - Kraftangriffspunkte zwischen der Antriebsspindel 1 und den Wälzringen 5 liegen. Das theoretisch Gewollte - Übertragung der Kraft von der Antriebsspindel 1 auf die Wälzringe 5 an einem Kraftangriffspunkt - läßt sich wegen der Elastizität der miteinander in Eingriff kommenden Werkstoffe nicht realisieren, vielmehr ergibt sich stets eine sichelförmige Kraftangriffsfläche. Nun soll konstruktiv sichergestellt werden, daß die tatsächlich wirksame - sichelförmige - Kraftangriffsfläche sich so weit wie möglich dem theoretisch Gewollten, einem Kraftangriffspunkt, annähert. Das ist dadurch erreicht, daß der Krümmungsradius 18 der in die Gewindenut 4 der Antriebsspindel 1 eingreifenden Wälzringe 5 ca. 0,7 bis 0,9 mal so groß wie der Krümmungsradius 19 der Gewindenut 4 der Antriebsspindel 1 sind.

Weiter ist bei den dargestellten Ausführungsbeispielen von erfindungsgemäßen Wälzringspindeltrieben der Krümmungsradius 18 der in die Gewindenut 4 der Antriebsspindel 1 eingreifenden Wälzringe 5 in Abhängigkeit vom Krümmungsradius 19 der Gewindenut 4 so gewählt, daß im Kraftangriffskreis 10 die Tangente 20 am Wälzring 5 unter ca. 45° zur Längsachse 7 der Antriebsspindel 1 verläuft.

Schließlich sei noch darauf hingewiesen, daß bei allen dargestellten Ausführungsbeispielen von erfindungsgemäßen Wälzringspindeltrieben die Antriebsspindel 1 über Radiallager 21 im Abtriebsgehäuse 3 gelagert ist.

## Patentansprüche

1. Wälzringspindeltrieb mit einer Antriebsspindel (1), mindestens einem Wälzlager (2) und einem Abtriebsgehäuse (3), wobei das Wälzlager (2) als Übertragungsglied zwischen der Antriebsspindel (1) und dem Abtriebsgehäuse (3) wirksam ist, mindestens einen in die Gewindenut der Antriebsspindel (1) eingreifenden Wälzring (5) aufweist, das Wälzlager (2) exzentrisch angeordnet ist, die Mittelachse (6) des Wälzlagers (2) gegenüber der Längsachse (7) der Antriebsspindel (1) geneigt ist und im Abtriebsgehäuse (3) mindestens eine Wälzlageraufnahme (8) angeordnet ist, dadurch gekennzeichnet, daß innerhalb des Abtriebsgehäuses (3) ein Wälzlageraufnahmekörper (13) vorgesehen ist, der die Wälzlageraufnahme (8) aufweist, so daß die axiale Kraft von der Antriebsspindel (1) auf das Gehäuse (3) über das Wälzlager (2) und den Wälzlageraufnahmekörper (13) übertragen wird, daß die Wälzlageraufnahme (8) über maximal 180° geht, so daß Wälzlager (2) senkrecht zu seiner Mittelachse (6) also in der Wälzlagerlaufebene (12) in die Wälzlageraufnahme (8) eingeschoben werden kann.

2. Wälzringspindeltrieb nach Anspruch 1, dadurch gekennzeichnet, daß zwei sich ergänzende Wälzlageraufnahmekörper (13) in radialer Richtung geteilt sind.

3. Wälzringspindeltrieb mit einer Antriebsspindel (1), mindestens einem Wälzlager (2) und einem Abtriebsgehäuse (3), wobei das Wälzlager (2) als Übertragungsglied zwischen der Antriebsspindel (1) und dem Abtriebsgehäuse (3) wirksam ist, mindestens einen in die Gewindenut der Antriebsspindel (1) eingreifenden Wälzring (5) aufweist, das Wälzlager (2) exzentrisch angeordnet ist, die Mittelachse (6) des Wälzlagers (2) gegenüber der Längsachse (7) der Antriebsspindel (1) geneigt ist und das Abtriebsgehäuse (3) mindestens eine Wälzlageraufnahme (8) aufweist, dadurch gekennzeichnet, daß die Wälzlageraufnahme (8) über maximal 180° geht, so daß das Wälzlager (2) senkrecht zu seiner Mittelachse (6), also in der Wälzlagerlaufebene (12), in die Wälzlageraufnahme (8) eingeschoben werden kann, daß das Abtriebsgehäuse (3) selbst mit der Wälzlageraufnahme (8) versehen ist und daß das Abtriebsgehäuse (3) in radialer Richtung geteilt ist.

4. Wälzringspindeltrieb nach einem der Ansprüche 1 bis 3, dadurch gekennzeichnet, daß das Maß der Exzentrizität (14) des Wälzlagers (2) einstellbar ist.

5. Wälzringspindeltrieb nach einem der Ansprüche 1, 2 oder 4, dadurch gekennzeichnet, daß der Wälzlageraufnahmekörper (13) in radialer Richtung relativ zur Antriebsspindel (1) einstellbar ist.

6. Wälzringspindeltrieb nach Anspruch 5, dadurch gekennzeichnet, daß das Abtriebsgehäuse (3) radial verlaufende Gewindebohrungen (15) aufweist und der Wälzlageraufnahmekörper (13) mit Hilfe von in den Gewindebohrungen (15) geführten Stellschrauben (16) radial einstellbar ist.

7. Wälzringspindeltrieb nach einem der Ansprüche 1 bis 6, dadurch gekennzeichnet, daß die Wälzlageraufnahme (8) in axialer Richtung relativ zur Antriebsspindel (1) einstellbar ist.

8. Wälzringspindeltrieb mit mindestens zwei Wälzlagern, wobei das Abtriebsgehäuse mindestens zwei Wälzlageraufnahmen aufweist, nach einem der Ansprüche 1 bis 6, dadurch gekennzeichnet, daß mindestens eine Wälzlageraufnahme (8) in axialer Richtung relativ zur Antriebsspindel (1) einstellbar ist.

9. Wälzringspindeltrieb nach Anspruch 8, dadurch gekennzeichnet, daß beide Wälzlageraufnahmen (8) in axialer Richtung relativ zur Antriebsspindel einstellbar sind.

10. Wälzringspindeltrieb nach einem der Ansprüche 1 bis 9, dadurch gekennzeichnet, daß die Neigung zwischen der Mittelachse (6) des Wälzlagers (2) und der Längsachse (7) der Antriebsspindel (1) der Steigung der Antriebsspindel (1) im Kraftangriffskreis (17) entspricht.

11. Wälzringspindeltrieb nach einem der Ansprüche 1 bis 10, dadurch gekennzeichnet, daß der Krümmungsradius (18) des in die Gewindenut (4) der Antriebsspindel (1) eingreifenden Wälzringes (5) ca. 0,7 bis 0,9 mal so groß ist wie der Krümmungsradius (19) der Gewindenut (4) der Antriebsspindel (1).

12. Wälzringspindeltrieb nach einem der Ansprüche 1 bis 11, dadurch gekennzeichnet, daß der Krümmungsradius (18) des in die Gewindenut (4) der Antriebsspindel (1) eingreifenden Wälzringes (5) in Abhängigkeit vom Krümmungsradius (19) der Gewindenut (4) so gewählt ist, daß im Kraftangriffskreis (17) die Tangente (20) am Wälzring (5) unter ca. 45° zur Längsachse (7) der Antriebsspindel (1) verläuft.

**Claims**

1. Rolling ring worm drive with a drive spindle (1), at least one anti-friction bearing (2) and a drive casing (3), whereby the anti-friction bearing (2) acts as transmission link between the drive spindle (1) and the drive casing (3), having at least one rolling ring (5) engaging with the screw thread of the drive spindle (1), and in that the anti-friction bearing (2) is arranged eccentrically the middle axis (6) of the anti-friction bearing (2) being inclined to the long axis (7) of the drive spindle (1), characterized in that within the drive casing (3) an anti-friction bearing carrier holder (13) is provided which holds the anti-friction bearing carrier (8) so that the axial force of the drive spindle (1) is transmitted to the housing (3) through the anti-friction bearing (2) and the anti-friction bearing carrier holder (13), and in that the anti-friction bearing carrier (8) moves over a maximum of 180°, so that the anti-friction bearing (2) can be inserted in the anti-friction bearing carrier (8) at right angles to its own middle axis (6) and so in he plane of operation (12) of the anti-friction bearing.

2. Rolling ring worm drive according to claim 1, characterized in that two anti-friction bearing carrier holders (13) complementary to each other are separated in a radial direction.

3. Rolling ring worm drive with a drive spindle (1), at least one anti-friction bearing (2) and a drive casing (3), whereby the anti-friction bearing (2) acts as transmission link between the drive spindle (1) and the drive casing (3), having at least one rolling ring (5) engaging with the screw thread of the drive spindle (1), and in that the anti-friction bearing (2) is arranged eccentrically the middle axis (6) of the anti-friction bearing (2) being inclined to the long axis (7) of the drive spindle (1), and in that the drive casing (3) has at least one anti-friction bearing carrier (8), characterized in that the anti-friction bearing carrier (8) moves over a maximum of 180°, so that the anti-friction bearing (2) can be inserted in the anti-friction bearing carrier (8) at right angles to its own middle axis (6) and so in the plane of operation (12) of the anti-friction bearing, in that the drive casing itself provides the anti-friction bearing carrier (8) and that the drive casing (3) is divided in a radial direction.

4. Rolling ring worm drive according to any of claims 1 to 3 characterized in that the extent of the eccentricity (14) of the anti-friction bearing (2) is adjustable.

5. Rolling ring worm drive according to any of claims 1, 2 or 4 characterized in that the anti-friction bearing carrier holder (13) can be adjusted in a radial direction relative to the drive spindle (1).

6. Rolling ring worm drive according to claim 5 characterized in that the drive casing (3) has a threaded boring (15) running radially and in that the anti-friction bearing carrier holder (13) can be radially adjusted with the help of the set screw (16) introduced in the threaded boring (15).

7. Rolling ring worm drive according to any of claims 1 to 6 characterized in that the anti-friction bearing carrier (8) can be adjusted in a radial direction relative to the drive spindle (1).

8. Rolling ring worm drive with at least two anti-friction bearings, whereby the drive casing has at least two anti-friction bearing carriers, according to one of claims 1 to 6, characterized in that at least one of the anti-friction bearing carriers (8) is adjustable in an axial direction relative to the drive spindle (1).

9. Rolling ring worm drive according to claim 8 characterized in that both anti-friction bearing carriers (8) are adjustable in an axial direction relative to the drive spindle.

10. Rolling ring worm drive according to any of claims 1 to 9 characterized in that the divergence between the middle axis (6) of the anti-friction bearing (2) and the long axis (7) of the drive spindle (1) corresponds to the raising of the drive spindle (1) in the power transmitting zone (17).

11. Rolling ring worm drive according to any of claims 1 to 10 characterized in that the radius of curvature (18) of the rolling ring (5) engaging in the thread groove (4) of the drive spindle (1) is about 0.7 to 0.9 times as large as the radius of curvature (19) of the thread groove (4) of the drive spindle (1).

12. Rolling ring worm drive according to any of claims 1 to 11 characterized in that the radius of curvature (18) of the rolling ring (5) engaging in the thread groove (4) of the drive spindle (1) is so chosen, in relation to the radius of curvature (19) of the thread groove (4), that the tangent (20) to the rolling ring (5) in the power transmitting zone (17) is at less than about 45° to the long axis (7) of the drive spindle (1).

**Revendications**

1. Commande par arbre à bague de roulememt avec um arbre de commande (1), au moins un palier à roulement (2) et un boîtier de sortie (3), le palier à roulement (2) qui est actif comme organe de transmission entre l'arbre de commande (1) et le boîtier de sortie (3) présentant au moins une bague roulante (5) s'engrenant dans la gorge de filet de l'arbre de commande (1), le palier à roulement (2) étant placé de manière excentrique, l'axe central (6) du palier à roulement (2) étant incliné par rapport à l'axe longitudinal (7) de l'arbre de commande (1) et au moins un logement pour palier à roulement (8) étant placé dans le boîtier de sortie (3), caractérisée en ce qu'un organe de logement pour palier à roulement (13) est placé à l'intérieur du boîtier de sortie (3) et qu il présente le logement pour palier à roulement (8) si bien que la force axiale est transmise par l'arbre de commande (1) au boîtier (3) par le palier à roulement (2) et l'organe de logement pour palier à roulement (12), que l'angle périphérique du logement du palier à roulement (8) est de 180° maximum si bien que le palier à roulement (2) peut être introduit par glissement dans le logement pour palier à roulement (8) perpendiculairement à son axe central (6) et donc dans le plan de roulement (12) du palier à roulement.

2. Commande par arbre à bague de roulement selon la revendication 1, caractérisée en ce que deux organes de logement pour palier à roulement (13) qui se complétent sont fendus dans le sens radial.

2. Commande par arbre à bague de roulement avec un arbre de commande (1), au moins un palier à roulement (2) et un boîtier de sortie (3), le palier à roulement (2) qui est actif comme organe de transmission entre l'arbre de commande (1) et le boîtier de sortie (3) présentant au moins une bague roulante (5) s'engrenant dans la gorge de filet de l'arbre de commande (1), le palier à roulement (2) étant placé de manière excentrique, l'axe central (6) du palier à roulement (2) étant incliné par rapport à l'axe longitudinal (7) de l'arbre de commande (1) et le boîtier de sortie (3) présentant au moins un logement pour palier à roulement (8), caractérisée en ce que l'angle périphérique du logement du palier à roulement (8) est de 180° maximum si bien que le palier à roulement (2) peut être introduit par glissement dans le logement pour palier à roulement (8) perpendiculairement à son axe central (6) et donc dans le plan de roulement (12) du palier à roulement, que le boîtier de sortie (3) lui-même est pourvu du logement pour palier à roulement (8) et que le boîtier de sortie (3) est fendu dans le sens radial.

4. Commande par arbre à bague de roulement selon l'une des revendications 1 à 3, caractérisée en ce que le rapport de l'excentricité (14) du palier à roulement (2) est réglable.

5. Commande par arbre à bague de roulement selon l'une des revendications 1, 2 ou 4, caractérisée en ce que l'organe de logement pour palier à roulement (13) est réglable par rapport à l'arbre de commande (1) dans le sens radial.

6. Commande par arbre à bague de roulement selon la revendication 5, caractérisée en ce que le boîtier de sortie (3) présente des forures taraudées dans le sens radial et quel'organe de logement pour palier à roulement (13) est réglable dans le sens radial à l'aide de vis de fixation (16) logées dans les forures taraudées (15).

7. Commande par arbre à bague de roulement selon l'une des revendications 1 à 6, caractérisée en ce que le logement pour palier à roulement (8) est réglable par rapport à l'arbre de commande (1) dans le sens axial.

8. Commande par arbre à bague de roulement avec au moins deux paliers à roulement, le boîtier de sortie présentant au moins deux logements pour palier à roulement, selon l'une des revendications 1 à 6, caractérisée en ce qu'au moins un logement pour palier à roulement (8) est réglable par rapport à l'arbre de commande (1) dans le sens axial.

9. Commande par arbre à bague de roulement selon la revendication 8, caractérisée en ce que les deux logements pour palier à roulement (8) sont réglables par rapport à l'arbre de commande dans le sens axial.

10. Commande par arbre à bague de roulement selon l'une des revendications 1 à 9, caractérisée en ce que la pente entre l'axe central (6) du palier à roulement (2) et l'axe longitudinal (7) de l'arbre de commande (1) correspond à la pente ascendante de l'arbre de commande (1) dans le cercle d'application de la force (17).

11. Commande par arbre à bague de roulement selon l'une des revendications 1 à 10, caractérisée en ce que le rayon de courbure (18) de la bague de roulement (5) qui s'engrène dans la gorge de filet (4) de l'arbre de commande (1) est équivalent à environ 0,7 à 0,9 fois le rayon de courbure (19) de la gorge de filet (4) de l'arbre de commande (1).

12. Commande par arbre à bague roulante selon l'une des revendications 1 à 11, caractérisée en ce que le rayon de courbure (18) de la bague de roulement (5) qui s'engrène dans la gorge de filet (4) de l'arbre de commande (1) est choisi en fonction du rayon de courbure (19) de la gorge de filet (4) de manière telle que, dans le cercle d'application de la force (17), l'angle de la tangente (20) de la bague de roulement (5) est inférieur à environ 45° par rapport à l'axe longitudinal (7) de l'arbre de commande (1).

**Fig.1**

0 122 596

Fig.2

0 122 596

**Fig. 3**

0 122 596

Fig.4

0 122 596

Fig.5

0 122 596

**Fig.6**

8

3

**Fig.7**

**Fig. 8**

# Fig.9

Fig.10

0 122 596